# FASCICULE DE BREVET EUROPEEN

(11) **EP 1 260 409 B1**
(45) Date de publication et mention de la délivrance du brevet: **24.10.2007**
(21) Numéro de dépôt: 02016471.1
(22) Date de dépôt: 16.12.1997
(51) Int. Cl.: B60Q 1/068, F21V 14/04

(54) **Projecteur de véhicules automobile equipe de moyens de reglage de réflecteur perfectionnes**
Fahrzeugscheinwerfer- Einstelleinrichtung des Reflektors
Vehicle headlight with reflector control device

(30) Priorité: 16.12.1996 FR 9615420; 16.12.1996 FR 9615422
(43) Date de publication de la demande: 27.11.2002
(62) Demande divisionnaire de: 97403057.9
(73) Titulaire: VALEO VISION, 93000 Bobigny (FR)
(72) Inventeur: Duchenne, Laurent, 94000 Créteil (FR); Grigorescu, Benony, 94000 Créteil (FR); Loiselet, Jean-Pierre, 94000 Créteil (FR)
(74) Mandataire: Renous Chan, Véronique

(56) Documents cités:
- EP-A- 0 562 581
- FR-A- 2 009 672
- FR-A- 2 254 956
- US-A- 5 142 455

## Description

La présente invention a trait d'une façon générale aux projecteurs, notamment projecteurs de complément, pour véhicules automobiles.

Une paire de projecteurs de complément est généralement prévue dans les véhicules de milieu de gamme ou de haute gamme et intégrés par exemple dans le bouclier avant du véhicule. Il s'agit le plus souvent de projecteurs longue portée ou antibrouillard.

Généralement, on conçoit un type de projecteur de complément commun à différents types de véhicules, en faisant en sorte que les moyens de montage du projecteur puissent s'adapter aussi aisément que possible à différents types de véhicules.

A cet égard, il est nécessaire d'équiper ce type de projecteur de moyens de réglage du faisceau, en particulier en site, ceci afin de faire face au fait que les projecteurs après montage sont susceptibles d'occuper différentes orientations, selon les véhicules dans lesquels ils sont montés.

De façon conventionnelle, de tels moyens de réglage comportent un organe pouvant être manoeuvré soit manuellement, soit électriquement, de manière à faire basculer le réflecteur, portant la lampe, autour d'un axe, dans une gamme angulaire définie par des butées de déplacement soit du réflecteur lui-même, soit de l'organe de réglage.

Un inconvénient de la solution connue consistant à fixer la lampe sur le réflecteur réside en ce que, pour fermer le projecteur de façon étanche tout en autorisant le remplacement d'une lampe défectueuse, il est nécessaire de fermer la partie postérieure du boîtier par une trappe d'accès à la lampe, qui constitue une pièce supplémentaire augmentant le coût de revient de l'ensemble.

Par ailleurs, c'est le réflecteur, réalisé en une matière synthétique plus coûteuse que le boîtier, qui doit alors comporter des aménagements particuliers, et parfois volumineux, pour le montage de la lampe sur celui-ci.

En outre, la lampe et le porte-lampe présentent un certain poids qui doit être supporté par le réflecteur, et ce dernier doit donc être conçu en fonction de cette contrainte, avec si nécessaire un renforcement et un nouveau surcroît de matière.

Classiquement, le déplacement d'une lampe conjointement avec son réflecteur s'impose dans la mesure où aucun décalage de la position de la lampe par rapport au réflecteur, en dehors des tolérances habituelles, n'est souhaitable pour l'homme du métier.

Telle est l'approche qui est adoptée dans le document FR 2 254 956, qui montre un projecteur, certes mobile en pivotement, mais dans lequel la lampe est fixe au sein du boîtier.

La Demanderesse, allant à l'encontre de ce préjugé, a constaté que sous certaines conditions, on pouvait accepter un décalage de la lampe par rapport au réflecteur sans que ce soit préjudiciable à la photométrie du faisceau engendré.

Ainsi, pour résoudre les inconvénients précités, la présente invention propose un projecteur selon la revendication 1.

Des aspects préférés, mais non limitatifs, du projecteur selon l'invention sont spécifiés dans les revendications dépendantes.

D'autres aspects, buts et avantages de la présente invention apparaîtront mieux à la lecture de la description détaillée suivante d'une forme de réalisation préférée de celle-ci, donnée à titre d'exemple et faite en référence aux dessins annexés, sur lesquels :
la figure 1 est une vue en coupe verticale axiale d'un projecteur selon l'invention,
la figure 2 est une vue en coupe horizontale axiale du projecteur de la figure 1,
la figure 3 est une vue en coupe verticale axiale à échelle agrandie d'une forme de réalisation d'un dispositif de réglage du projecteur des figures 1 et 2,
la figure 4 est une vue de dessus d'un organe de réglage du dispositif de réglage de la figure 3, et
la figure 5 est une vue partielle en coupe transversale selon la ligne V de la figure 3.

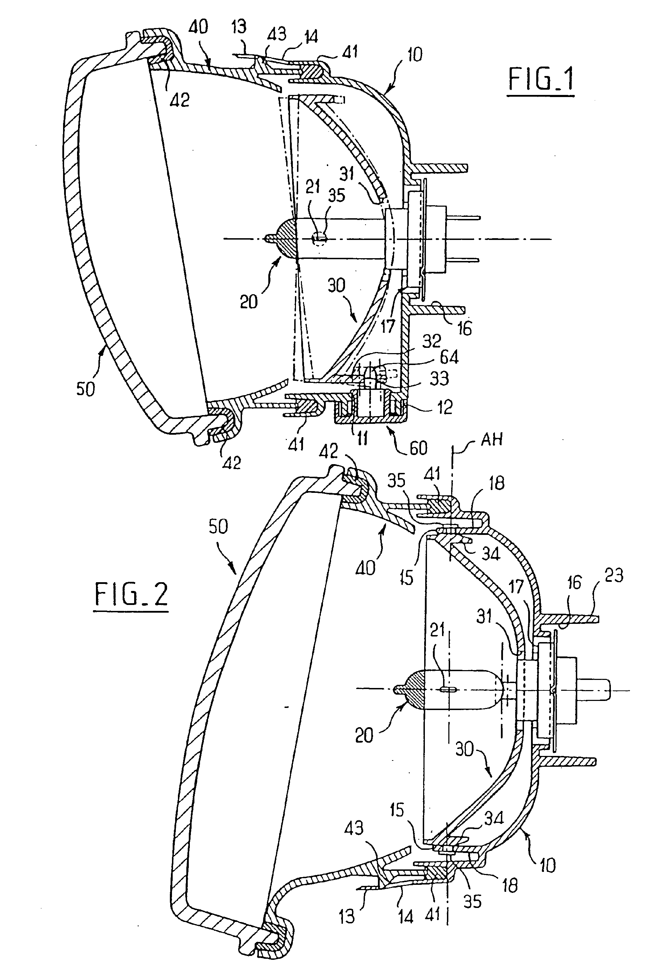

En référence au dessin, et tout d'abord aux figures 1 et 2, on a représenté un projecteur de complément pour véhicule automobile.

Ce projecteur comprend un boîtier postérieur 10, une glace frontale 50 et une pièce intermédiaire annulaire 40 reliant de façon étanche le boîtier et la glace. A cet effet, deux joints d'étanchéité périphériques 41, 42 sont interposés, pour l'un entre des aménagements à nervure et gorge formés respectivement sur la pièce intermédiaire 40 et le boîtier 10, et pour l'autre entre des aménagements à nervure et gorge formés respectivement sur la glace 50 et sur la pièce intermédiaire 40. La pièce intermédiaire 40 est fixée sur le boîtier, en comprimant le joint 41, à l'aide de dents d'encliquetage élastique 43 venues de matière sur la pièce 40 et s'accrochant dans des ouvertures 14 prévues dans des prolongements 13 du boîtier dirigés vers l'avant, à l'extérieur de la gorge recevant le joint 41.

On notera ici que, de façon avantageuse, la pièce 40 peut à elle seule comporter tous les moyens de fixation du projecteur dans le véhicule. De la sorte, lorsqu'un projecteur selon l'invention devra être installé dans des véhicules de types différents, nécessitant des moyens de fixation adaptés, il suffit de prévoir une pièce 40 appropriée au véhicule considéré, et tous les autres composants du projecteur peuvent rester identiques.

On diminue ainsi le nombre de pièces référencées, et donc le coût de fabrication.

Les pièces 10, 40, 50 définissent un espace fermé qui abrite un réflecteur 30 et une lampe 20. La lampe 20 est reliée à un porte-lampe (non représenté) monté fixement et de façon étanche à l'aide d'un joint dans une cavité cylindrique 16 formée à l'arrière du boîtier 10 et débouchant dans ledit espace fermé par une ouverture 17 traversée par la lampe 20.

Optionnellement, on prévoit autour de la lampe un occulteur (non représenté) destiné à ce que le rayonnement issu du filament ne puisse ailleurs que vers le réflecteur 30.

Le réflecteur 30 n'est pas solidaire de la lampe, et comporte une ouverture de fond 31 destinée à laisser passer celle-ci avec un jeu approprié, comme on le verra plus loin.

De façon avantageuse, le réflecteur est du type capable de former un faisceau de configuration souhaitée en projetant avec une répartition judicieuse les images du filament 21 de la lampe, et de préférence la glace 50 est non-déviatrice ou peu déviatrice.

Typiquement, le faisceau engendré est un faisceau antibrouillard, présentant une largeur substantielle et délimité par une coupure généralement horizontale, ou encore un faisceau longue-portée, avec une forte pointe de concentration lumineuse dans l'axe.

Les documents FR-A-2 536 503, FR-A-2 600 024, FR-A-2 602 305, FR-A-2 609 146, FR-A-2 639 888 et FR-A-2 664 677, tous au nom de la Demanderesse, donnent des exemples de telles surfaces réfléchissantes. On utilise de préférence une surface telle que décrite dans l'un des documents FR-A-2 639 888 et FR-A-2 664 677 ou comportant une combinaison des surfaces susmentionnées.

Un projecteur tel que décrit ci-dessus, tout particulièrement lorsqu'il s'agit d'un projecteur de complément, doit autoriser un réglage de la hauteur du faisceau qu'il engendre, ceci d'une part afin de permettre son montage avec des orientations différentes dans différents types de véhicules, et d'autre part afin de compenser les éventuelles tolérances de fabrication et les éventuels jeux de montage.

Selon un aspect de l'invention, le réflecteur est monté de façon articulée autour d'un axe horizontal AH (voir figure 2) qui, de façon préférée, passe par le centre du filament en intersectant l'axe optique du réflecteur.

A cet effet, le réflecteur 30 comporte au niveau de ses bords latéraux deux ailes rentrantes 34 de rigidification, à partir desquelles font saillie vers l'extérieur respectivement deux pions cylindriques coaxiaux 35.

Le boîtier 10 comporte quant à lui deux membrures 18 dirigées vers l'avant et comportant des encoches 15 dans lesquelles les pions 35 sont reçus étroitement, mais sans blocage, pour assurer le montage du réflecteur dans le boîtier de telle sorte qu'il puisse basculer autour de l'axe AH, confondu avec les axes des deux pions 35.

De façon avantageuse, la forme des encoches 15 est telle que le montage du réflecteur 30 sur le boîtier s'effectue par un phénomène d'encliquetage élastique des pions 35 dans lesdites encoches. De façon également avantageuse, les pions 35 comportent des têtes élargies 35a permettant d'emprisonner, suivant la direction de l'axe AH, les membrures 18 entre lesdites têtes 35a et les ailes 34 du réflecteur.

Comme on l'a indiqué plus haut, l'ouverture 31 formée dans le fond du réflecteur 30 pour le passage libre de la lampe est dimensionnée de manière à éviter que ladite lampe fasse obstacle au basculement du réflecteur dans une gamme angulaire déterminée, par exemple de ±5° de part et d'autre de l'horizontale.

Le projecteur selon l'invention comporte également un dispositif de réglage de la position angulaire du seul réflecteur 30, de manière à positionner le faisceau engendré à la hauteur souhaitée.

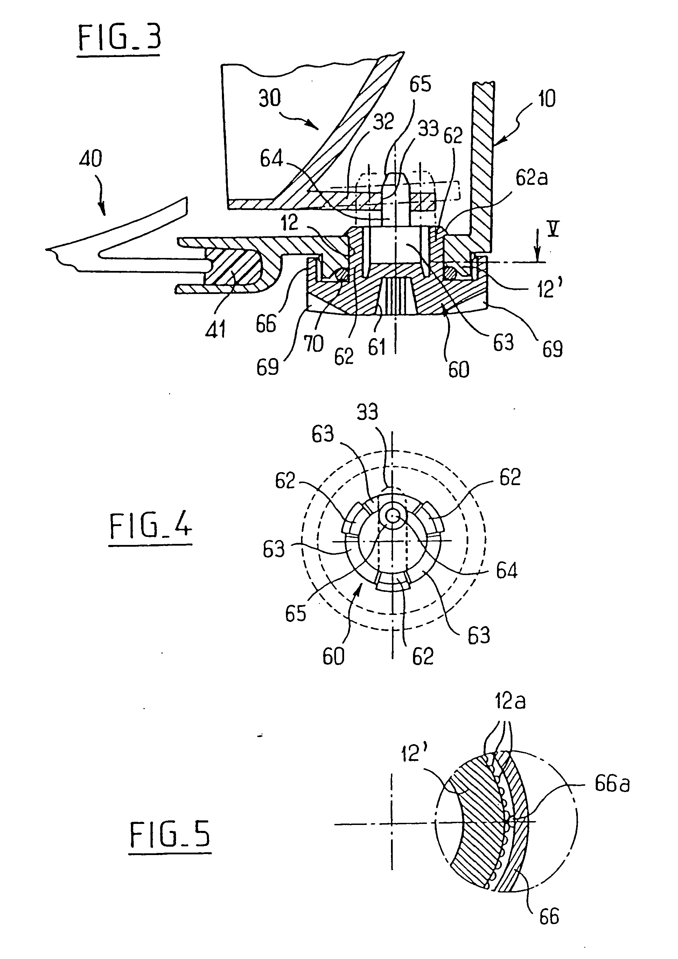

Dans le présent exemple, et comme représenté plus en détail sur les figures 3 à 5, ce dispositif comporte, côté réflecteur 30, une membrure plate essentiellement horizontale 32 s'étendant vers l'arrière à partir du bord inférieur du réflecteur et dans laquelle est pratiquée une fente oblongue dont le grand axe s'étend parallèlement à l'axe AH.

Le dispositif comporte également un organe de manoeuvre et d'entraînement, globalement désigné par la référence 60, qui présente la forme générale d'un bouchon à collerette extérieure encliqueté et reçu de façon pivotante dans une ouverture circulaire formée dans la paroi inférieure du boîtier 10.

Plus précisément, le boîtier comporte une ouverture circulaire 12 entourée par une nervure annulaire 12' en saillie vers le bas, et à la surface libre de laquelle est formé un siège en coin pour un joint torique d'étanchéité 70.

L'organe 60 comporte quant à lui une partie principale de contour circulaire, plus épaisse en son centre, à la surface extérieure de laquelle est formée une empreinte 61 pour un outil de réglage (par exemple une empreinte à six pans hexagonaux, ou encore une empreinte de type "Torx" ou cruciforme). Dans la surface extérieure de l'organe 60 sont également ménagées, à sa périphérie, des encoches 69 destinées, par sollicitation généralement tangentielle à l'aide de la pointe d'un tournevis ou analogue, à permettre le réglage du réflecteur à partir de l'arrière, de l'avant ou du côté du projecteur.

A partir de cette partie principale s'étend vers le haut une jupe annulaire constituée par trois pattes 62, élastiquement déformables vers l'intérieur et pourvues au niveau de l'extérieur de leur bord libre de dents d'accrochage 62a, et par trois parties fixes 63 s'étendant entre les parties formant pattes 62 et séparées d'elles par des fentes radiales étroites.

L'organe 60 comporte, autour de la partie formant jupe, une surface s'étendant radialement et apte, lors de sa mise en place se terminant par l'encliquetage élastique des pattes 62 dans l'ouverture 12 du boîtier, à comprimer le joint torique 70 dans son siège.

L'organe 60 comprend en outre un rebord périphérique rentrant 66 entourant la nervure annulaire 12' du boîtier.

Enfin l'organe 60 comprend un pion saillant 64 s'étendant vers le haut à partir du bord libre de l'une des parties fixes 63 de la jupe, c'est-à-dire de façon excentrée par rapport à l'axe de rotation de l'organe 60, ce pion étant destiné, lors du montage de l'organe 60, à pénétrer dans la fente oblongue 33 du réflecteur. On notera que l'extrémité en biseau 65 du pion 64 facilite cette pénétration.

On comprend que la rotation de l'organe 60 à l'aide d'un outil coopérant avec son empreinte 61 provoque le déplacement du point bas du réflecteur horizontalement sur la figure 3, et donc le basculement du réflecteur 30 autour de son axe de basculement AH, le pion 64 glissant dans la fente 33 lors de ces mouvements. L'excentricité du pion 64 par rapport à l'axe de rotation de l'organe 60 est choisie de manière à pouvoir effectuer ce basculement dans un intervalle angulaire approprié, par exemple ±5°.

Afin d'éviter tout déréglage intempestif du réflecteur, on prévoit des moyens pour résister à la rotation intempestive de l'organe 60 lorsqu'il est libéré de l'outil de réglage.

Une première solution consiste à concevoir l'organe 60 et la partie avoisinante du boîtier de telle sorte que l'organe 60 tourne avec frottement doux, la valeur de ce frottement étant choisie pour garantir la stabilité à terme du réglage tout en offrant à l'outil de réglage un couple résistant qui ne soit pas excessif.

Une autre solution est illustrée sur la figure consiste à prévoir tout le long de la périphérie cylindrique de la nervure annulaire 12' des bossages 12a de profil par exemple semi-circulaire, légèrement espacés les uns des autres. Le rebord rentrant 66 de l'organe 60 comporte quant à lui un bossage unique 66a de profil semi-circulaire, qui est en appui élastique contre les bossages 12a pour constituer un mécanisme de crantage qui crée une résistance à la rotation intempestive de l'organe 60, tout en définissant autant de positions de réglage stables qu'il y a de bossages 12a.

Bien entendu, d'autres solutions peuvent être imaginées.

Un avantage du dispositif de réglage décrit ci-dessus est qu'il est capable d'effectuer un réglage très fin de l'orientation du réflecteur 30 dans la gamme angulaire souhaitée, tout en ne comportant aucune butée de fin de course ou analogue susceptible de se détériorer ou de se rompre si l'opérateur excerce sur l'organe 60 de sollicitations excessives.

Comme on l'a décrit plus haut, le réflecteur, lors du réglage, bascule autour d'un axe qui passe au proche voisinage du filament de la lampe.

Comme on l'a également indiqué, le réflecteur est préférentiellement du type capable de créer un faisceau lumineux par une répartition judicieuse des images projetées du filament.

Il est clair que, pour atteindre cet objectif, la position du filament doit être déterminée avec une précision suffisante, faute de quoi le faisceau est très sensiblement dégradé.

Or on comprend aisément que, si l'axe de basculement AH du réflecteur 30 est tel que défini ci-dessus, le basculement du réflecteur conduit, vu dudit réflecteur, à un simple basculement relatif du filament sur la gamme angulaire de réglage, en l'occurrence sur ±5°, qui s'avère parfaitement compatible avec l'obtention d'un faisceau de bonne qualité.

En particulier, les basculements résultants de certaines images du filament ne vont pas notablement affecter la photométrie du faisceau, abstraction faite de son décalage en hauteur, tant les décalages sont minimes.

Bien entendu, de légers écarts de l'axe de basculement AH sont admissibles. En outre, même lorsque la position du foyer de référence du réflecteur par rapport au filament varie (selon la conception du réflecteur), on prévoit avantageusement que l'axe AH reste au voisinage du milieu du filament en direction axiale, de manière à limiter le déplacement relatif du filament, vu du réflecteur, lorsque ce dernier bascule.

Bien entendu, la présente invention n'est nullement limitée aux formes de réalisation décrites et représentées, mais l'homme du métier saura y apporter toute variante ou modification conforme à son esprit.

En particulier, un projecteur selon la présente invention peut être utilisé avec des types de lampes très différents, et notamment avec des lampes normalisées H7, H1, H8 ou encore 9xxx (lampes utilisées aux Etats-Unis d'Amérique).

## Revendications

1. Projecteur de véhicule automobile, notamment projecteur de complément, du type comprenant une source lumineuse (21), un réflecteur (30) coopérant avec la source pour former un faisceau de photométrie souhaitée, un boîtier (10) recevant le réflecteur et la lampe et fermé par une glace (50), et un dispositif de réglage (32, 33, 60) de l'orientation du faisceau par pivotement du réflecteur autour d'un axe de basculement (AH), **caractérisé en ce que** la source lumineuse (21) est montée fixe dans le boîtier et **en ce que** l'axe de basculement (AH) du réflecteur passe au voisinage de la source.

2. Projecteur selon la revendication 1, **caractérisé en ce que** le réflecteur (30) comporte une surface réfléchissante apte à répartir les images de la source de manière à engendrer par elle-même un faisceau de photométrie déterminée, et **en ce que** l'axe de basculement (AH) du réflecteur passe à travers la source (21).

3. Projecteur selon la revendication 2, **caractérisé en ce que** l'axe de basculement (AH) passe au voisinage du milieu de la source (21) en direction axiale.

4. Projecteur selon l'une des revendications 1 à 3, **caractérisé en ce que** l'axe de basculement (AH) est horizontal et généralement perpendiculaire à l'axe du réflecteur (30).

5. Projecteur selon la revendication 4, **caractérisé en ce que** l'axe de basculement (AH) passe au voisinage du bord inférieur de la source.

6. Projecteur selon l'une des revendications 4 et 5,
**caractérisé en ce que** l'axe du réflecteur (AH) est défini par deux pions (35) en saillie vers l'extérieur à partir des bords latéraux du réflecteur, et **en ce que** lesdits pions sont engagés dans des ouvertures (15) formées dans le boîtier (10).

7. Projecteur selon la revendication 6, **caractérisé en ce que** les pions (35) sont engagés par encliquetage dans les ouvertures débouchantes (15) formées dans des membrures (18) venues de matière avec le boîtier.

8. Projecteur selon l'une des revendications 1 à 7, **caractérisé en ce qu'**il comprend des moyens de fixation sur le véhicule, **en ce qu'**il comprend en outre une pièce intermédiaire (40) s'étendant entre un bord antérieur du boîtier (10) et la périphérie de la glace (50) et **en ce que** lesdits moyens de fixation sont prévus sur la pièce intermédiaire.

## Claims

1. Motor vehicle driving light, in particular a supplementary driving light, of the type comprising a light source (21), a reflector (30) cooperating with the source in order to form a beam with the required photometric pattern, a housing (10) receiving the reflector and lamp and closed by a lens (50), and a device (32, 33, 60) for adjusting the orientation of the beam by pivoting the reflector about a tilting axis (AH), **characterised in that** the light source (21) is mounted fixed in the housing and **in that** the tilting axis (AH) of the reflector passes close to the source.

2. Driving light according to claim 1, **characterised in that** the reflector (30) has a reflecting surface able to distribute the images of the source so as to generate by itself a beam with a given photometric pattern, and **in that** the tilting axis (AH) of the reflector passes through the source (21).

3. Driving light according to claim 2, **characterised in that** the tilting axis (AH) passes close to the middle of the source (21) in the axial direction.

4. Driving light according to one of claims 1 to 3, **characterised in that** the tilting axis (AH) is horizontal and generally perpendicular to the axis of the reflector (30).

5. Driving light according to claim 4, **characterised in that** the tilting axis (AH) passes close to the bottom edge of the source.

6. Driving light according to one of claims 4 and 5, **characterised in that** the axis of the reflector (AH) is defined by two studs (35) projecting outwards from the lateral edges of the reflector, and **in that** the said studs are engaged in openings (15) formed in the housing (10).

7. Driving light according to claim 6, **characterised in that** the studs (35) are engaged by snapping into the emerging openings (15) formed in members (18) made in one piece with the housing.

8. Driving light according to one of claims 1 to 7, **characterised in that** it comprises means for fixing to the vehicle, **in that** it also comprises an intermediate piece (40) extending between a front edge of the housing (10) and the periphery of the lens (50) and **in that** the said fixing means are provided on the intermediate piece.

## Patentansprüche

1. KraftFahrzeugscheinwerfer, insbesondere Zusatzscheinwerfer, des Typs mit einer Lichtquelle (21), einem mit der Lichtquelle zusammenwirkenden Reflektor (30) zum Bilden eines Lichtbündels mit gewünschter Lichtverteilung, einem Gehäuse (10), das den Reflektor und die Lampe aufnimmt und durch eine Scheibe (50) geschlossen ist, und einer Vorrichtung (32, 33, 60) zum Einstellen der Ausrichtung des Lichtbündels durch Schwenken des Reflektors um eine Schwenkachse (AH),
**dadurch gekennzeichnet, dass** die Lichtquelle (21) in dem Gehäuse feststehend angebracht ist und die Schwenkachse (AH) des Reflektors in der Nähe der Lichtquelle verläuft.

2. Scheinwerfer nach Anspruch 1,
**dadurch gekennzeichnet, dass** der Reflektor (30) eine Reflexionsfläche aufweist, welche die Abbildungen der Lichtquelle zu verteilen vermag, um selbst ein Lichtbündel mit bestimmter Lichtverteilung zu erzeugen, und dass die Schwenkachse (AH) des Reflektors durch die Lichtquelle (21) hindurch verläuft.

3. Scheinwerfer nach Anspruch 2,
**dadurch gekennzeichnet, dass** die Schwenkachse (AH) in der Nähe der Mitte der Lichtquelle (21) in axialer Richtung verläuft.

4. Scheinwerfer nach einem der Ansprüche 1 bis 3,
**dadurch gekennzeichnet, dass** die Schwenkachse (AH) horizontal und allgemein lotrecht zur Achse des Reflektors (30) verläuft.

5. Scheinwerfer nach Anspruch 4,
**dadurch gekennzeichnet, dass** die Schwenkachse (AH) in der Nähe des unteren Rands der Lichtquelle verläuft.

6. Scheinwerfer nach einem der Ansprüche 4 oder 5,
**dadurch gekennzeichnet, dass** die Achse des Reflektors (AH) durch zwei Stifte (35) definiert ist, die von den Seitenrändern des Reflektors aus nach außen vorstehen, und dass diese Stifte in Öffnungen (15) eingreifen, die in dem Gehäuse (10) ausgebildet sind.

7. Scheinwerfer nach Anspruch 6,
**dadurch gekennzeichnet, dass** die Stifte (35) durch Einrasten in die durchgehenden Öffnungen (15) eingreifen, die in Rippen (18) gebildet sind, welche mit dem Gehäuse einstückig ausgebildet sind.

8. Scheinwerfer nach einem der Ansprüche 1 bis 7,
**dadurch gekennzeichnet, dass** er Mittel zum Befestigen am Fahrzeug umfasst, dass er ferner ein Zwischenstück (40) umfasst, das zwischen einem vorderen Rand des Gehäuses (10) und dem Rand der Scheibe (50) verläuft, und dass die Befestigungsmittel auf dem Zwischenstück vorgesehen sind.
